# EUROPEAN PATENT APPLICATION

(11) **EP 1 598 821 A2**
(43) Date of publication of application: **23.11.2005**
(21) Application number: 05010976.8
(22) Date of filing: 20.05.2005
(51) Int. Cl.: G11B 17/04

(54) **Disk drive**

(30) Priority: 21.05.2004 JP 2004152242
(71) Applicant: Funai Electric Co., Ltd., Daito-shi, Osaka (JP)
(72) Inventor: Okazaki, Nobuyuki, Daito-shi Osaka (JP); Hayashi, Ryuji, Daito-shi Osaka (JP)
(74) Representative: Grünecker, Kinkeldey, Stockmair & Schwanhäusser Anwaltssozietät

(57) **Abstract**

Mechanical components necessary for carrying out an optical processing for a disk are built in a housing and a disk-driving mechanism equipped with a disk tray for carrying the disk in and out is accommodated inside an outer housing. The housing of the disk-driving mechanism is integrally molded with a synthetic resin on the basal plate of the outer housing, and a main chassis to which the mechanical components are assembled is formed by the basal plate and the housing.

## Description

### BACKGROUND OF THE INVENTION

### 1. Field of the Invention

The present invention related to a disk drive, inparticular a disk drive, wherein mechanical components necessary for carrying out an optical processing for a disk are built in a housing and a disk-driving mechanism equipped with a disk tray for carrying the disk in and out of the housing is accommodated inside an outer housing having at the front an opening from which the disk tray is withdrawn.

### 2. Description of the Related Art

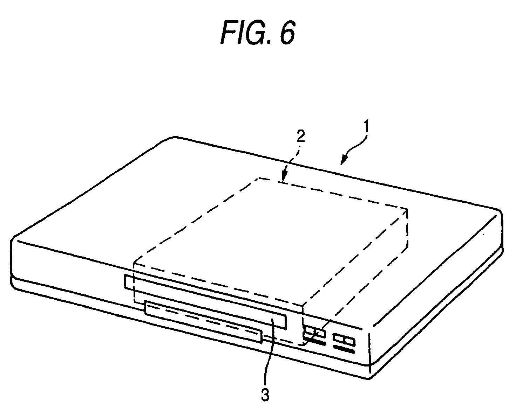

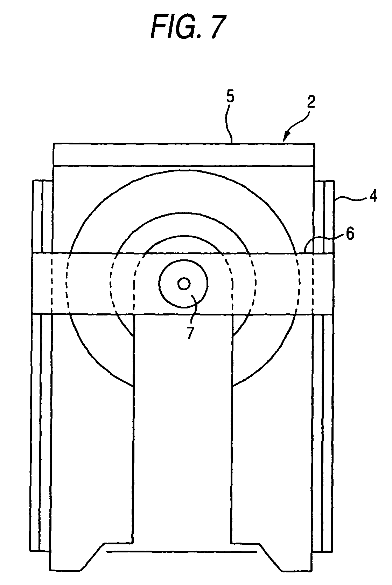

In conventional audio visual devices handling CDs and DVDs, as shown in FIG. 6asaschematicperspectiveview, adisk-driving mechanism 2 is built in a flat-box type outer housing 1, a disk tray (not illustrated) mounted on the disk-driving mechanism 2 is designed to move back and forth between the front position of the outer housing 1 and the position for accommodating the disk-driving mechanism 2 through the opening 3 provided in front of the outer housing 1. Further, as illustrated as a schematic plain view in FIG. 7, the conventional disk-driving mechanism 2 is provided with a housing 4, mechanical components necessary for carrying out an optical processing for a disk (not illustrated) are accommodated in the housing 4, and the disk tray 5 is mounted on the housing 4. The mechanical components include a disk chucking mechanism (not illustrated) for receiving from the disk tray 5 the disk (not illustrated) carried into the housing 4 by the disk tray 5 to rotate it, a drive chassis (not illustrated) accommodated in the housing 4, an elevation controlling mechanism (not illustrated) for moving up and down the drive chassis and a filler member 6 bridged laterally to the housing 4, and the filler member 6 is integrally molded with a synthetic resin on the housing 4. The drive chassis is also provided with a turntable (not illustrated) for receiving the disk from the disk tray 5 after the drive chassis is moved up by the action of the elevation controlling mechanism, a clamper 7 working with the turntable to hold the disk therebetween is provided on the filler member 6, and the disk chucking mechanism is constituted by the turntable and the clamper 7.

In assembly procedures for the conventional disk drive shown in FIG. 6, when the disk-driving mechanism 2 is accommodated inside the outer housing 1 and fixed therein, the dimension of the position at which the disk driving mechanism 2 were controlled with a high degree of accuracy so that the disk tray 5 (refer to FIG. 7) could smoothly pass through an opening 3 in front of the outer housing 1. In addition, four screws are used to fix the disk-driving mechanism 2 to the outer housing individually at four positions.

An optical disk drive is known, as another conventional example, wherein a base plate equipped with a loading mechanism for moving optical disk media and an optical head is assembled to a housing as an outerpart of the drive (refer to JP-A-8-297964, for example). It is also known as a conventional example of an information recording device such as an external device for a personal computer, wherein a hard-disk driving mechanism is accommodated in the housing (refer to JP-A-2003-272371, for example). These examples are similar in construction to the conventional disk-driving mechanism described with reference to FIG. 6 or FIG. 7 in that necessary mechanical components are built in the housing. In particular, in the example described in JP-A-8-297964, when these parts are accommodated inside an outer housing to constitute the disk drive, dimensional control is required with a high degree of accuracy, as with the conventional disk drive described with reference to FIG. 6 or FIG. 7. In contrast, the information recording drive described in JP-A-2003-272371 is used in itself as an external device for a personal computer, and it is not realistic to consider an example where the device is used after being accommodated inside the outer housing.

In the conventional disk drive for which a description was made with reference to FIG. 6 or FIG. 7, procedures for assembling necessary mechanical components individually to the housing 4 of the disk-driving mechanism 2 and those for assembling the disk tray 5 are included during the entire assembling steps and also the disk-driving mechanism 2 assembled through such complicated steps is assembled to the outer housing 1 with a high degree of accuracy, therefore, posing a problem of making the entire assembling steps more complicated. This problem is also found in the optical disk drive described in JP-A-8-297964.

### SUMMARY OF THE INVENTION

The present invention has been made, with the above problems taken into account, and an object of the invention is to provide a disk drive wherein a housing of a disk-driving mechanism which is integrally molded on an outer housing is used as a main chassis, mechanical components of a disk-driving mechanism and a disk tray can be assembled to the main chassis, thereby making it possible to simplify the assembling steps of the disk drive which accommodates the disk-driving mechanism, thereby removing any inconvenience in assemblingparts with a high degree of accuracy and also reducing the number of necessary parts.

A disk drive of the present invention is that in which mechanical components necessary for carrying out an optical processing for a disk are built in a housing and a disk-driving mechanism equipped with a disk tray for carrying the disk in and out of the housing is accommodated inside an outer housing having at the front an opening from which the disk tray is withdrawn, wherein the housing of the disk-driving mechanism is integrally molded with a synthetic resin on the outer housing. More preferably, the housing is integrally molded with a synthetic resin on a basal plate of the outer housing, and the main chassis to which the mechanical components are assembled is formed by the basal plate and the housing.

In the above-described construction, the mechanical components and the disk tray can be assembled to the housing equipped in the main chassis, by which the entire steps of assembling the disk drive including those of assembling the disk-driving mechanism can be performed. Therefore, unlike the conventional drive, the above-described construction removes the necessity not only of the troublesome work of further assembling to the outer housing with screws the disk-driving mechanism assembled by separate steps but also the screws for assembly themselves. Furthermore, the housing to which the disk tray is assembled is integrally molded on the outer housing having an opening at the front, removing the necessity for controlling with a high degree of accuracy the dimension of a position at which the disk-driving mechanism is fixed so that the disk tray can smoothly pass the opening in front of the outer housing, therefore, simplifying the dimensional control.

The disk drive of the present invention can be constituted in such a way that the mechanical components include a disk chucking mechanism for receiving from a disk tray a disk carried into the housing by the disk tray to rotate it, a drive chassis accommodated in the housing, an elevation controlling mechanism for moving up and down the drive chassis and a filler member bridged laterally to the housing, the drive chassis is provided with a turntable for receiving from the disk tray the disk after the drive chassis is moved up by the action of the elevation controlling mechanism, a clamper working with the turntable to hold the disk therebetween is provided on the filler member, and the disk chucking mechanism is formed by the turntable and the clamper.

According to the disk drive wherein the mechanical components include the above-described disk chucking mechanism, since the disk carried into the housing by the disk tray is received by the disk chucking mechanism and rotated, it is possible to optically scan the recording surface of the rotating disk.

The disk drive of the present invention can be constituted in such a way that the turntable-equipped drive chassis, the elevation controlling mechanism and the filler member to which the clamper is attached can be assembled to the housing of the main chassis from thereabove, and the disk tray can also be assembled to the housing through the opening of the outer housing. This construction not only provides a better workability of assembling the drive chassis, the elevation controlling mechanism and the filler member, but also removes the necessity for assembling them to the main chassis from below, for which no opening for assembly is required at a position surrounded by the housing of the main chassis. As the result, it is possible to form a main chassis free of an opening attributable to the entrance of dust, thereby protecting mechanical components from damage attributable to dust and realizing a more stable operation.

In the present invention, it is desirable that locking claws and locking apertures which engage each other by the operation of pressing down the filler member to connect the filler member to the housing are provided separately and correspondingly on the main chassis and the filler member. It is also preferable that the drive chassis is provided with a laterally-facing spindle and a front-facing spindle respectively on the rear end and the front end, the main chassis is provided with a bearing mechanism for rotatably supporting the laterally-facing spindle by the operation of pressing downward the laterally-facing spindle, the front-facing spindle is transverse-slidably engaged with the cam groove of the elevation controlling mechanismmounted on the main chassis, and the drive chassis is structured so as to move up and down on the basis of the laterally-facing spindle by the traverse slide operation of the elevation controlling mechanism. According to these individual inventions, the filler member or the drive chassis can be easily assembled to the main chassis without using special parts in separate steps.

The present invention can be executed more specifically by adopting the disk drive having the following construction, namely, that in which mechanical components necessary for carrying out an optical processing for a disk are built in a housing and a disk-driving mechanism equipped with a disk tray for carrying the disk in and out of the housing is accommodated inside an outer housing having at the front an opening from which the disk tray is withdrawn, wherein the housing of the disk-driving mechanism is integrally molded with a synthetic resin on the basal plate of the outer housing at the traverse center of the basal plate, a main chassis to which the mechanical components are assembled is formed by the basal plate and the housing, the mechanical components include a disk chucking mechanism for receiving from the disk tray the disk carried into the housing by the disk tray to rotate it, a drive chassis accommodated in the housing, an elevation controlling mechanism for moving up and down the drive chassis and a filler member bridged laterally to the housing, the drive chassis is provided with a turntable for receiving from the disk tray the disk after the drive chassis is moved up by the action of the elevation controlling mechanism, a clamper working with the turntable to hold the disk therebetween is provided on the filler member, the disk chucking mechanism is formed by the turntable and the clamper, the drive chassis is provided with a laterally-facing spindle and a front-facing spindle respectively on the rear end and the front end, the housing is provided with a bearing mechanism for rotatably supporting the laterally-facing spindle by the operation of pressing downward the laterally-facing spindle, the front-facing spindle is transverse-slidably engaged with the cam groove of the elevation controlling mechanism mounted on the housing, the drive chassis is structured so as to move up and down on the basis of the laterally-facing spindle by the traverse slide operation of the elevation controlling mechanism, locking claws and locking apertures engage each other by the operation of pressing down the filler member to connect the filler member to the housing are provided separately and correspondingly on the housing and the filler member, and the disk tray can be assembled to the housing through the opening of the outer housing.

The invention will be described in detail with reference to the embodiments to be described later.

As described so far, according to the present invention, since the housing of the disk-driving mechanism molded in an integrated form on the outer housing is used as a main chassis and mechanical components of the disk-driving mechanism and the disk tray can be assembled to the main chassis, it is possible not only to simplify the entire steps of assembling a disk drive which accommodates the disk-driving mechanism to a greater extent than a conventional drive but also to remove a troublesome dimensional control during assembly and the necessity for parts such as a housing of the disk-driving mechanism or several screws for fixing the housing to the outer housing, thereby reducing the number of necessary parts. It is, therefore, possible to provide a disk drive excellent in reliable operation of the disk tray at a less expensive price. Further, a disk drive provided with measures for assembling mechanical components of the disk-driving mechanism and others to the main chassis from above may be free of an opening attributable to the entrance of dust on the main chassis and advantageous in protecting the mechanical components from dust and improving reliable operation.

### BRIEF DESCRIPTION OF THE DRAWINGS

These and other objects and advantages of this invention will become more fully apparent from the following detailed description taken with the accompanying drawings in which:
FIG. 1 is a schematic exploded perspective view of the disk drive of the present invention;
FIG. 2 is a schematic perspective view showing a state that the drive chassis is assembled to the housing of the main chassis;
FIG. 3 is a schematic perspective view of the major part of the disk drive;
FIG. 4A is a partially broken front view showing a position of supporting the drive chassis 30 by the housing, and FIG. 4B is a cross-sectional view taken along the line of IVB to IVB of FIG. 4A;
FIG. 5 is a schematic vertical cross-sectional view for explaining the operation of the disk chucking mechanism;
FIG. 6 is an external perspective view of the conventional disk drive; and
FIG. 7 is a schematic plain view of the disk-driving mechanism used in the conventional disk drive.

### DETAILED DESCRIPTION OF THE PREFERRED EMBODIMENTS

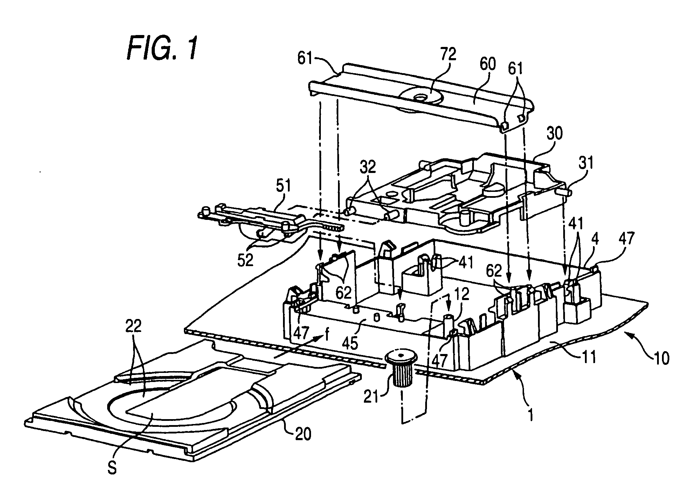

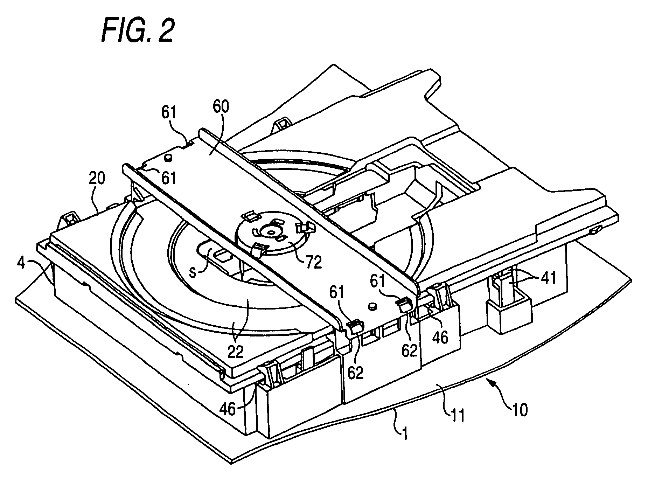

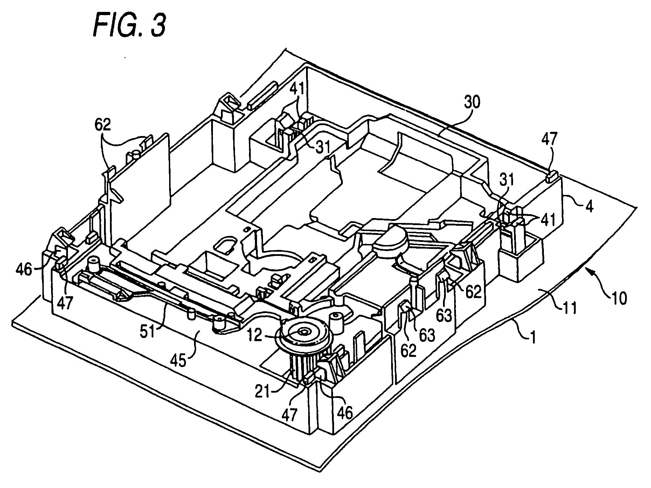

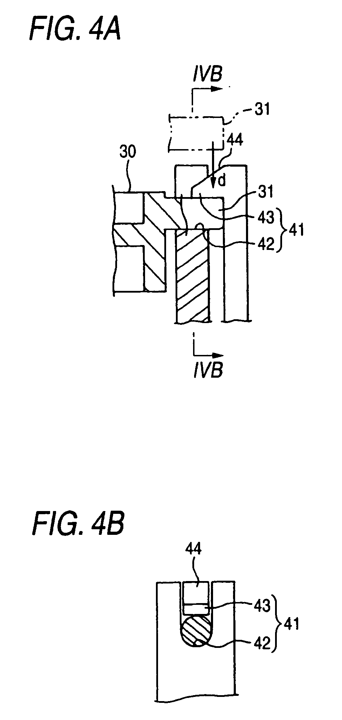

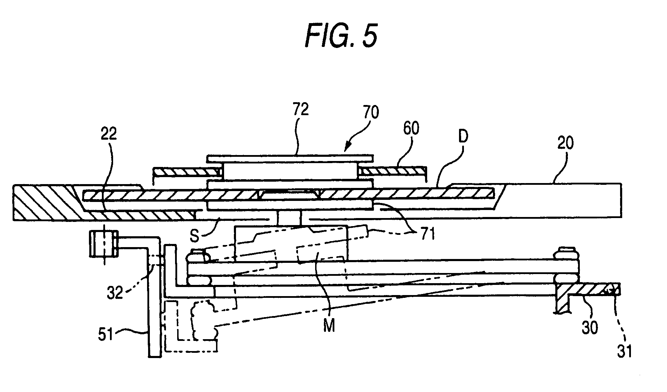

FIG. 1 is a schematic exploded perspective view of the disk drive according to the present invention, FIG. 2 is a schematic perspective view showing a state that the drive chassis and others are assembled to the housing 4 of the main chassis 10, and FIG. 3 is a schematic perspective view of major parts of the disk drive. Further, FIG. 4A is a partially broken front view showing the position of supporting the drive chassis 30 by the housing 4, FIG 4B is a cross sectional view taken along the line of IVB-IVB in FIG. 4A, and FIG. 5 is a schematic longitudinal side view for illustrating the operation of the disk chucking mechanism 70.

In FIG. 1, 10 denotes a main chassis. The main chassis 10 corresponds to the outer housing 1 described in FIG. 6 which is integrally molded with a synthetic resin on the housing 4 of the disk driving mechanism 2 described in FIG. 7. To be more specific, an approximately rectangular housing 4 is placed at the traverse center of the basal plate 11 of the outer housing 1, and the lower surface of a space surrounded by the housing 4 is closed by the basal plate 11. In the disk drive, mechanical components to be described later are assembled to the main chassis 10 from above, and the disk tray 20 is assembled to the housing 4 by using an opening 3 provided in front of the outer housing 1 (refer to FIG. 6). Further, since the housing 4 is integrally molded on the basal plate 11 of the outer housing 1 and the opening 3 is provided in front of the outer housing 1, the opening 3 is positioned in the housing 4 with a high degree of accuracy. Therefore, the disk tray 20 can always be withdrawn smoothly through the opening 3 after the opening 3 provided in front of the outer housing 1 is used to assemble the disk tray 20 to the housing 4.

Mechanical components are necessary for carrying out an optical processing for a disk, including the optical pick-up (not illustrated) and the drive chassis 30 to which the driving mechanism is fixed. In the examples illustrated, the drive chassis 30 is provided with the laterally-facing spindle 31on both the right and left sides of the rear end, whereas the bearing mechanism 41 for rotatably supporting the laterally-facing spindle 31 is integrally molded with a synthetic resin on both the right and left sides of the rear end of the housing 4. As shown in FIGS. 4A and 4B, the bearing mechanism 41 is formed by an above-opened U-shaped groove 42 and a nail piece 43 facing to the U-shaped groove 42 from the outside of the U-shaped groove 42, and the laterally-facing spindle 31 fitted into the U-shaped groove 42 of the bearing mechanism 41 is pressed by the nail piece 43 to the U-shaped groove 42. Due to the above-described construction, the laterally-facing spindle 31 can be rotated and prevented by the nail piece 43 from being dropped off from the U-shaped groove 42. In this embodiment, the U-shaped groove 42 is opened above and the upper edge face of the nail piece 43 is formed as an inclined surface 44 which slants down to the U-shaped groove 42. Therefore, when the laterally-facing spindle 31 is pressed down from above the U-shaped groove 42, following the arrow d, as shown by the virtual line in FIG. 4A, the laterally-facing spindle 31 is brought into contact with the inclined surface 44 of the nail piece 43, then, sliding and riding over the inclined surface 44, with the nail piece 43 deformed backward, and falling into the U--shaped groove 42, by which the laterally-facing spindle 31 is pressed to the U-shaped groove 42 by the nail piece 43 restored to the original posture and rotatably supported.

As shown in FIG. 1, the drive chassis 30 is provided with the front-facing spindle 32 on the front end, whereas a cam slider 51 having the cam groove 52 is assembled to the housing 4 from above. The cam slider 51 is transverse-slidably, assembled by the horizontal slide surface 45 mounted on the front end of the housing 4, and the front-facing spindle 32 of the drive chassis 30 is slidably engaged with the cam groove 52. Then, when the cam slider 51 is transversely slid, the front-facing spindle 32 is guided vertically by the cam groove 52 and the drive chassis 30 is moved up and down on the basis of the laterally-facing spindle 31. Therefore, the cam slider 51 constitutes the elevation controlling mechanism for moving the drive chassis up and down, and the elevation controlling member is also included in the mechanical components.

The longitudinally-long filler member 60 shown in FIG. 1 is also included in the mechanical components. The filler member 60 is provided with the locking aperture 61 on both the right and left ends, whereas the locking nail 62, a counterpart of the locking aperture 61, is provided on both the right and left ends of the housing 4. The locking nail 62 fitted into the locking aperture 61 is engaged with the locking aperture 61, by which the filler member 60 is connected to the housing 4, while bridged laterally thereto. In this embodiment, the upper end surface of the locking nail 62 is formed as an inclined surface 63 which slants down toward the outside (refer to FIG. 2). Therefore, when the locking aperture 61 of the fillermember 60 is engaged with the locking nail 62 and pressed down, the locking aperture 61 is brought into contact with the inclined surface 63 of the locking nail 62, then, sliding and riding over the inclined surface 63, with the locking nail 62 deformed backward (inwardly), by which the locking nail 62 restored to the original posture is engaged with the locking aperture 61 and the filler member 60 is connected to the housing 4.

In addition, the mechanical components include the disk chucking mechanism 70 constituted by the turntable 71 and the clamper 72 shown in FIG. 5. The turntable 71 is driven and rotated by the stepping motor M mounted on the drive chassis. The clamper 72 is provided at the traverse center of the filler member 60, and the clamper 72 works with the turntable 71 to hold the disk D therebetween for rotation. A series of operations for holding and rotating the disk D by the disk chucking mechanism 70 will be described later.

As shown in FIG. 1 through FIG. 3, both the right and the left ends of the housing 4 are provided with necessary elements such as a guide groove 46 to slidably retain the disk tray 20 back and forth and a stopper 47 for restricting the moving area of the disk tray 20. The disk tray 20 is fitted into the guide groove 46 in front of the outer housing 1, as shown by the arrow f in FIG. 1, through the opening 3 provided in front of the outer housing 1 described in FIG. 6, and assembled to the housing 4. Further, FIG. 3 shows a state that the disk tray 20 is accommodated in the housing 4.

The disk tray 20 is necessary for carrying the disk (not illustrated) in and out of the housing 4, and the tray gear 21 for withdrawing the disk tray 20 through the opening 3 of the outer housing 1 is rotatably retained by the supporting axis 12 projected from the basal plate 11 of the outer housing 1 at a space surrounded by the housing 4, as shown in FIG. 1 or FIG. 2. The tray gear 21 is driven and rotated clockwise or counter-clockwise by the motor (not illustrated).

Then, a description will be made for a series of operations of the above disk chucking mechanism 70 with reference to FIG. 5. The disk D is attached to or detached from a disk-receiving part 22 of the disk tray 20 projected outside the outer housing 1. Then, the disk chucking mechanism 70 is actuated after the disk tray 20 on which the disk D is placed is retracted to the disk-receiving part 22 and accommodated in the housing 4. To be more specific, when the disk tray 20 is accommodated in the housing 4, the slide cam 51 transversely slides, as an elevation controlling mechanism, to move the drive chassis 30 upward on the basis of the laterally-facing spindle 31. In this instance, the upwardmovement of the drive chassis 30 allows the turntable 71 mounted on the drive chassis 30 to pass through an opening space S of the disk tray 20 and receive the disk D placed on the disk-receiving part 22, then floating it up from the disk-receiving part 22, as shown in FIG. 5, and the clamper 72 works with the turntable 71 to hold the disk D therebetween. In this state, the turntable 71 rotates, together with the disk D. In a mode where the disk D rotates, optical elements such as an optical pick-up (not illustrated) act to scan the recording surface of the disk D.

In contrast, when the rotation of the turntable 71 working with the clamper 72 for holding the disk D therebetween is stopped and the slide cam 51, as an elevation controlling mechanism, transversely slides to that mentioned above to move the drive chassis 30 downward on the basis of the laterally-facing spindle 31, the disk D is transferred from the turntable 71 to the disk tray 20. Therefore, when the disk tray 20 is projected from the opening 3 of the outer housing 1 by the following operation, it is possible to take the disk from the disk tray 20 in front of the outer housing 1.

## Claims

1. A disk drive comprising:
mechanical components;
a housing; and
a outer housing, wherein:
the mechanical components necessary for carrying out an optical processing for a disk are built in the housing and a disk-driving mechanism equipped with a disk tray for carrying the disk in and out of the housing is accommodated inside the outer housing having at the front an opening from which the disk tray is withdrawn;
the housing of the disk-driving mechanism is integrally molded with a synthetic resin on the basal plate of the outer housing at the traverse center of the basal plate, amain chassis to which the mechanical components are assembled is formed by the basal plate and the housing;
the mechanical components includes a disk chucking mechanism for receiving from the disk tray the disk carried into the housing by the disk tray to rotate it, a drive chassis accommodated in the housing, an elevation control lingmechanism for moving up and down the drive chassis and a filler member bridged laterally to the housing, the drive chassis is provided with a turntable for receiving from the disk tray the disk after the drive chassis is moved up by the action of the elevation controlling mechanism, a clamper working with the turntable to hold the disk therebetween is provided on the filler member, the disk chucking mechanism is formed by the turntable and the clamper;
the drive chassis is provided with a laterally-facing spindle and a front-facing spindle, respectively, on the rear end and the front end, the housing is provided with a bearing mechanism for rotatably supporting the laterally-facing spindle by the operation of pressing downward the laterally-facing spindle, the front-facing spindle is slidably engaged with the cam groove of the elevation controlling mechanism slidably mounted on the housing in the traverse direction, the drive chassis is structured so as to move up and down on the basis of the laterally-facing spindle by the traverse slide operation of the elevation controlling mechanism;
locking claws and locking apertures which engages each other by the operation of pressing down the filler member to connect the filler member to the housing are provided separately in the housing and the filler member correspondingly; and
the disk tray is assembled to the housing through the opening of the outer housing.

2. A disk drive comprising:
mechanical components;
a housing; and
a outer housing, wherein:
the mechanical components necessary for carrying out an optical processing for a disk are built in the housing and a disk-driving mechanism equipped with a disk tray for carrying the disk in and out of the housing is accommodated inside the outer housing having at the front an opening from which the disk tray is withdrawn; and
the housing of the disk-driving mechanism is integrally molded on the outer housing with a synthetic resin.

3. The disk drive according to Claim 2, wherein
the housing is integrally molded with a synthetic resin on the basal plate of the outer housing, and a main chassis to which the mechanical components are assembled is formed by the basal plate and the housing.

4. The disk drive according to Claim 3, wherein
the mechanical components includes a disk chucking mechanism for receiving from the disk tray the disk carried into the housing by the disk tray to rotate it, a drive chassis accommodated in the housing, an elevation controlling mechanism for moving up and down the drive chassis and a filler member bridged laterally to the housing, the drive chassis is provided with a turntable for receiving from the disk tray the disk after the drive chassis is moved up by the action of the elevation controlling mechanism, a clamper working with the turntable to hold the disk therebetween is provided on the filler member, and the disk chucking mechanism is formed by the turntable and the clamper.

5. The disk drive according to Claim 4, wherein
the turntable-equipped drive chassis, the elevation controlling mechanism and the filler member to which the clamper is attached is assembled to the housing of the main chassis from thereabove, and the disk tray is assembled to the housing through the opening of the outer housing.

6. The disk drive according to Claim 5, wherein
locking claws and locking apertures which engage each other by the operation of pressing down the filler member to connect the filler member to the housing are provided separately on the housing and the filler member correspondingly.

7. The disk drive according to Claim 5, wherein
the drive chassis is provided with a laterally-facing spindle and a front-facing spindle respectively on the rear end and the front end, the main chassis is provided with a bearing mechanism for rotatably supporting the laterally-facing spindle by the operation of pressing downward the laterally-facing spindle, the front-facing spindle is slidably engaged with the cam groove of the elevation controlling mechanism mounted on the main chassis in the traverse direction, and the drive chassis is structured so as to move up and down on the basis of the laterally-facing spindle by the traverse slide operation of the elevation controlling mechanism.
